# EUROPEAN PATENT APPLICATION

(11) **EP 3 721 706 A1**
(43) Date of publication of application: **14.10.2020**
(21) Application number: 19169086.6
(22) Date of filing: 12.04.2019
(51) Int. Cl.: A01K 11/00, G10L 17/26

(54) **REAL-TIME ANIMAL SYSTEM DETECTION BASED ON THE SPECIFIC SOUNDS PRODUCED BY THEM**

(71) Applicant: Universidade de Évora, 7000-803 Évora (PT)
(72) Inventor: Mira, António, 7050-113 Montemor-o-Novo (PT)
(74) Representative: Gata-Goncalves, Ligia

(57) **Abstract**

The present invention relates to a full autonomous system capable of automatically recording (360), detecting, identifying and quantifying animal species by sounds specifically produced by some species, in particular, bird species.For this purpose, the system comprises an element for audio and video capturing (G), recording (360) and visualization, based on the specific sounds produced by the species of interest and lens with zoom function;

a storage element (D), for storing the recorded data and a library of known bird sounds (H);

an electronic processor and software;

a device for internet-based connection, and a power storage and supply system (6).The system of the present invention is useful for biodiversity monitoring, ecosystem management, such as bird census and, also, for entertainment purposes. It can be further adapted to survey other animals, since they produce unique identifiable sounds.Therefore, the system of the present invention is in the domain of instruments and apparatus having an association of cameras with sound-recording devices and processing data.

## Description

### Technical domain of the invention

The present invention relates to full autonomous system for automatically recording, detecting, identifying and quantifying animal species based on the specific sounds produced by an animal species of interest, said system comprising an element for audio and video capturing, recording and visualization, having a lens system with zoom function; a storage element, for storing the recorded data; a library of known animal sounds; an electronic processor and software; a device for internet-based connection; and a power storage and supply system.

The system of the present invention is useful for biodiversity monitoring, ecosystem management, in particular, when applied to bird species for bird census and, also for entertainment purposes. It can be adapted to survey any other animals, as long as they produce unique identifiable sounds.

Therefore, the system of the present invention is in the domain of instruments and apparatus having association of cameras with sound-recording devices and processing data.

### Background of the invention

Passerines (Order *Passeriformes*) is the most diverse group of birds, representing about half of the number of species, and being ecologically very relevant. Most passerines are small-sized birds, and many species are very similar, being identified mostly by their vocalizations. Therefore, acoustic identification is the most efficient tool to monitor passerines.

Bird census are most often made by point counts where an experienced technician registers all bird contacts (sounds and sightings) during a usually short (10-15 minutes) time interval. This implies regular travel to sampling sites. Moreover, sampling is restricted for a short period of the day (usually in the morning and/or afternoon), which may bias the results.

Thus, there is a great need for development of automated recording and detection of avian sounds devices that can operate continuously in a fully autonomous way for at least 10 days. Birds are critical to ecosystem functioning so techniques to make avian monitoring more efficient and accurate will greatly benefit science and conservation efforts.

Robin is a device developed by Cornell Lab, inserted in Bioacoustics Research Program, is a real-time detection and reporting unit and it is used to monitor marine environments, as well as terrestrial environments.

Raven-X tool set integrates high-performance computing (HPC) technologies and bioacoustics data-mining capabilities. However, these devices produce very heavy data files that must be manually trimmed and manipulated so that only the sound of the animal of interest remains.

The document CN102065272 A describes an acoustic image integrated wild bird recognition technology-based remote wireless monitoring system comprises a twitter recording module, a video recording module, an audio and video data processing module, an audio and video stream transmission module and an audio and video digital document storage module, wherein the twitter recording module records the twitter of wild birds and converts the recorded twitter into digital signals by sampling and quantification the video recording module records images of an ecological environment mainly by a camera, and converts the recorded images into the digital signals by sampling and quantification. However, this system is unable to recording, detecting and identifying passerines by sounds since it has no means to compare the recorded sounds and corresponding bird to a previous constructed library of sounds.

Therefore, there is a need for a system, which is easier to operate, able to be placed in the specific locations, to operate at least during several days in continuous, and demanding little data processing to analyse the relevant data therein recorded. Moreover, no other device combines acoustic surveys with video data that may be used to confirm species identification or to complement sound surveys as it is traditionally done in animal surveys by direct observations in the field, in particular passerine surveys.

### Summary of the invention

The present invention relates to full autonomous system capable of automatically recording, detecting, identifying and quantifying animal species by sounds, in particular passerines and to a process for recording, detecting and identifying animal species by sounds they produce.

For this purpose, the system comprises an element for audio and video capturing, recording and visualization, a lens system with zoom function, a data storage element, a library of known animal sounds, an electronic processor and software, a power storage and supply system and a device for internet-based connection according to claim 1.

With the system of the present invention it is possible to automatically record, detect, identify and quantify animal species, preferably bird species by the particular sounds they produce.

The device is able to operate in different type of modes including in continuous or intermittently in specified dates and hours mode that can be remotely defined in an easier to operate, reproducible and accurate way.

In another embodiment, the invention relates to a process for recording, detecting and identifying passerines by sounds comprising the steps of capturing the images and sounds emitted by animals in a determined area, recording said data and comparing it with an existing animal-sounds library for identification and quantification of the animal species present in said area in that particular time frame, according to claim 9.

One of the main advantages of the system is the use of artificial intelligence, which gives it the capability of self-adaptation, self-learning and self-improvement which means it is capable of learning from its own collected data.

### Description of the Figures

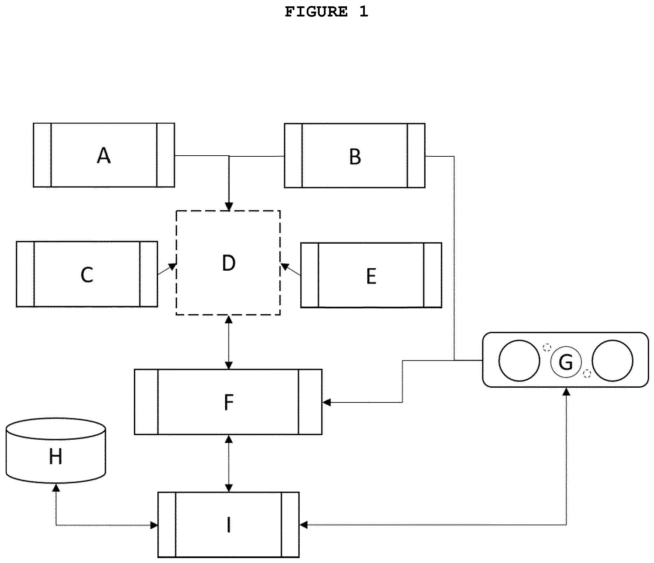

**Figure 1****.** Shows a representation of a diagram of a specific embodiment of the invention with the following system elements:
   A. Battery
   B. Sound record device
   C. GPS (Global Position System)
   D. Main processor
   E. RTC (Real-time clock and timer)
   F. Main Software (Species Identifier)
   G. Motion detection/Video record camera
   H. Online Sound Database
   I. GSM (Global System for Mobile communication)

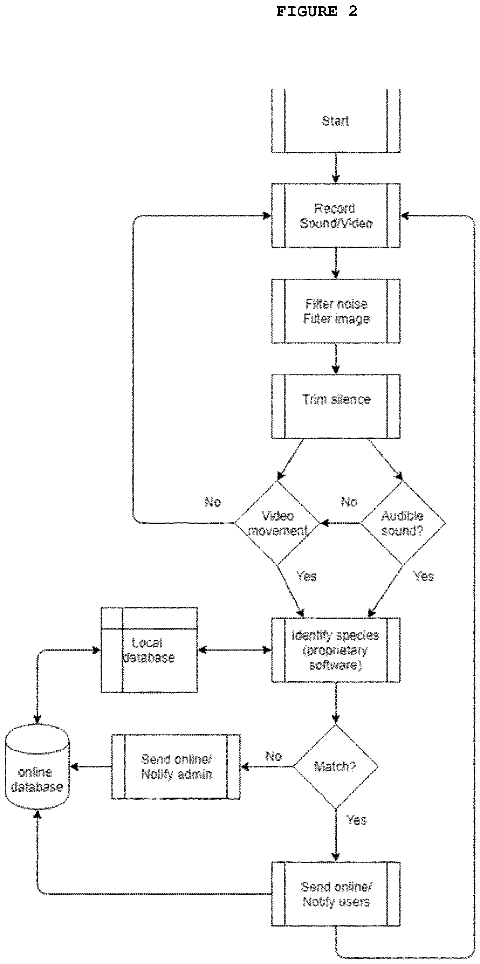

**Figure 2****.** Shows a flow chart of a process for automatically recording, detecting and identifying animals by their particular sounds.

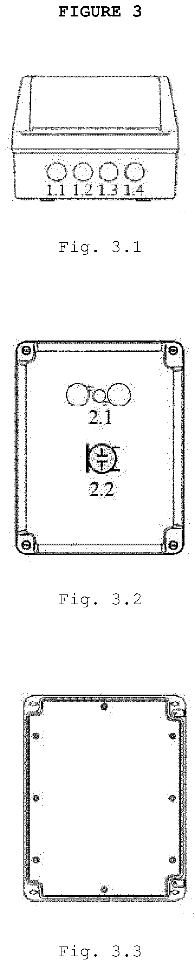

**Figure 3****.** Represents the device protection box, wherein:
   Fig. 3.1 Frontal view with 4 points of cable input and output (1.1,1.2,1.3,1.4)
   Fig. 3.2 Top view representation of dual camera and infrared emitters (2.1) and microphone representation (2.2)
   Fig. 3.3 Back side view with screw fixer points

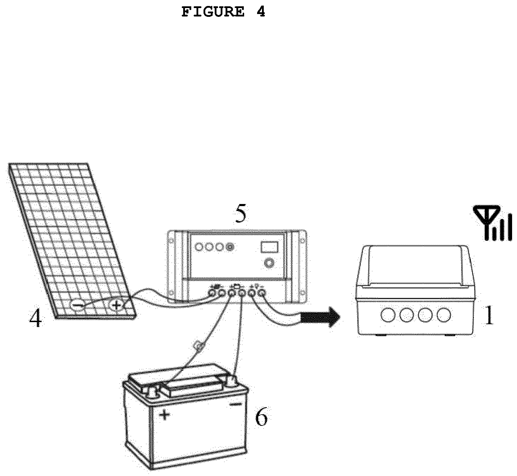

**Figure 4****.** Represents an embodiment of the system of the invention, wherein:
   1. Front side view main system with protection box
   4. Solar panel
   5. Energy harvester for in-field charging
   6. Battery

### Description of the invention

The present invention relates to a system for automatically recording, detecting, identifying and quantifying bird species or other animals based on the specific sound produced by the different species of interest comprising audio visual capturing, recording and visualization means, data storage elements, a library of known birds or other animals sounds, electronics thereof, a processor, software, a power storage and supply system and Internet-based connection means.

### System components

As mentioned before, the system of the invention comprises:
a) an element for automatically audio and video capturing, recording and visualization (G) having,
b) a lens system with zoom function (not shown),
c) a data storage element (D),
d) a library of known animal sounds (H),
e) an electronic processor and adequate software including (i) an algorithm for comparison purposes between the sound captured data and the sound library data, and (ii) real-time animal sound detection capability and filtering (D),
f) an internet-based connection device (I), and
g) a power storage and supply system (6) comprising a solar panel for collecting solar energy and a battery capable of being charged with the collected energy from the solar panel (4).

The system has real-time animal detection capability and filtering (select real animal sound, instead of noise). Therefore, in one preferred embodiment, the system comprises a microphone with noise cancelation and 36KHz band detection.

The system is capable of working 24/7 because of the use of solar energy harvesting and posterior storage on the battery or working only during the selected period of time due to the presence of a real timer-clock.

Due to its Internet-based connection device, the system is capable of sending all collected data to the cloud, this away is possible to access all data remotely.

The library of known animal sounds allows the system to compare the acquired animal sounds with the sounds registered in this library, which can grow by the addition of new animal sounds. Therefore, in a preferred embodiment, the library of animal sounds is a library consisting of bird sounds for bird species identification.

Furthermore, the system is able to complement the sound records with video records in order to confirm, validating and/or add a recorded sound with visual animal detection.

This system is propitious to have many variations, for example, a 360° camera can be used in order to achieve a complete view of the surroundings. A long-range communication device such as a LORA® device can be added in order to cut the costs of GSM and still have wireless long-range transmission of the obtained data.

In another preferred embodiment, the system comprises a camera having a Fisheye Lens with a field of view of 160°, a 5-megapixel sensor, a CCD size of 1/4inch and aperture (F) of 2.35, with a maximum resolution of 1920x1080 pixels.

Regarding the main processor, anything capable of managing the peripherical can be used, it is more preferable to run in a Linux based system in order to have compatibility with all available software.

The lifetime of the battery only depends on how much time the system needs to work as well as the solar panel. Therefore, several types of batteries can be chosen in function of the intended working time, costs, etc.

Some peripheral devices such as GPS and GSM can be present or removed in order to have a cheaper device.

In one preferred embodiment, the system comprises the following components:
- A quad-core processor, responsible for the connection and control of the main peripherals.
- A dual-band (2.4 and 5GHz) wireless LAN and Bluetooth 4.2 device, responsible for the wireless communication, for data transfer and configuration.
- A Fisheye Lens camera with a field of view of 160°, with a 5-megapixel sensor, CCD size of 1/4inch and aperture(F) of 2.35, with a maximum resolution of 1920x1080 pixels.
- A microphone with noise cancelation and 36KHz band detection.
- A GPS/GSM device that supports GPRS, GSM, SMS, GNSS, Audio communication and Bluetooth.
- A Photovoltaic Panel Polycrystalline Silicon 30W/12V, responsible for harvesting solar energy.
- A Lead-acid battery 12V 40Ah.
- A protecting permeable box for protecting all the components from the environment except the solar panel and the battery.

### System implementation:

Description in a few steps on how to use the system of the invention:
1. Lock the solar panel in an elevated place preferably in direct sunlight.
2. Connect the battery and the solar panel to the energy harvesting device.
3. Secure the system case so that the microphone does not become clogged.
4. Connect the system to the energy harvesting device.
5. The system will connect automatically to the assigned server and a green light should appear at the box.
6. Access to the assigned server by computer and wait for the results.

The present invention also describes a process for automatically recording, detecting, identifying and quantifying bird species or other animals, in particular, birds.

The process of the present invention comprises the following steps:
a) capturing the images and sounds emitted by animals present in a selected area during a selected period of time,
b) recording, storing and/or streaming the captured data of (a),
c) filtering the sounds of (b), and
d) comparing the filtered sound data of (c) with an existing animal-sounds library for identification and quantification of the animal species.

When the recorded and processed data is analysed it is possible to identify and quantify bird species or other animals present in the said area in that particular time frame.

Therefore, in a preferred embodiment of the process of the invention further includes a step of processing the obtained data for the identification and quantification of the relevant species.

### Examples

### Example 1. Animal detection system standard configuration

This system is composed by all the needed components in order to create a device capable of detecting, record and send, animal sounds acquired in the wild, as well as video in high definition.
- Broadcom quad-core ARM Cortex A53 (ARMv8)
- Cypress CYW43455, with 802.11ac dual-band (2.4 and 5GHz) wireless LAN and Bluetooth 4.2
- Fisheye Lens camera with a field of view of 160°, using a 5-megapixel OV5647 sensor, CCD size of 1/4inch and aperture(F) of 2.35, with a maximum resolution of 1920x1080 pixels
- Trust microphone with noise cancelation and 36KHz band detection
- GPS/GSM SIM868 device that supports GPRS, GSM, SMS, GNSS, Audio communication and Bluetooth
- VELLEMAN Photovoltaic Panel Polycrystalline Silicon 30W/12V
- Ultracell Lead-acid battery 12V 40Ah
- Protecting permeable box IP66 (Dustproof, protected against water jets)

### Example 2. An animal detection system - cheap implementation

This system is a cheaper version with the capability of detecting record and send animal sounds, but however, it cannot record high-quality videos as well as high-quality sound when compared to example 1. It has also a lower autonomy.
- Raspberry Pi 2
- VGA OV7670 CMOS 640X480 SCCB
- General microphone with noise cancelation
- GPS/GSM SIM548 device that supports GPRS, GSM, SMS, GNSS, Audio communication and Bluetooth
- VELLEMAN Photovoltaic Panel Polycrystalline Silicon 15W/12V
- Ultracell Lead-acid battery 12V 10Ah
- Protecting permeable box IP61 (Dustproof, protected against falling drops)

### Example 3. An animal detection system - improved implementation

This system is composed by all the needed components in order to create a device capable of detecting, record and send, animal sounds acquired in the wild, as well as video in high definition. When compared to example 1, it includes the capability of recording 360 degrees video and has an improved processor, a better data transmission module and a high definition low noise microphone.
- Rikomagic RK3399 Hexa Core processor
- Asus AC1300, with 802.11ac dual-band (2.4 and 5GHz) wireless LAN and Bluetooth 4.2
- Insta360 Pro 8K VR
- Audio-Technica AT2020USB+
- GPS/GSM HL8548G
- VELLEMAN Photovoltaic Panel Polycrystalline Silicon 120W/12V
- Ultracell Lead-acid battery 12V 65Ah
- Protecting permeable box IP68 (Dustproof, protected against continuous immersion in water)

## Claims

1. A **system** for identification and quantification of animal species **characterized by** comprising:
h) an element for automatically audio and video capturing, recording and visualization (G),
i) a lens system with zoom function (G),
j) a data storage element (D),
k) a library of known animal sounds (H),
1) an electronic processor and adequate software including
(i) an algorithm for comparison purposes between the sound captured data and the sound library data (F), and
(ii) real-time animal sound detection capability and filtering (B),
m) an internet-based connection device (I), and
n) a and power storage (A) and supply system comprising a solar panel for collecting solar energy (4) and a battery capable of being charged with the collected energy from the solar panel (6).

2. A system according to claim 1 **characterized by** the element for automatically audio and video capturing (G), recording and visualization of (a) comprises a microphone with noise cancelation and 36KHz band detection (B).

3. A system according to claim 1 **characterized by** the element for automatically audio and video capturing (G), recording and visualization of (a) comprises a camera having a Fisheye Lens with a field of view of 160°, a 5-megapixel sensor, CCD size of 1/4inch and aperture (F) of 2.35, with a maximum resolution of 1920x1080 pixels.

4. A system according to claim 1 **characterized by** the sound library of (d) is a library consisting of bird sounds, preferably passerine sounds (H).

5. A system according to claim 1 **characterized by** the electronic processor and adequate software of (e) is capable of running in a Linux based system (D).

6. A system according to any of the claims 1 to 5 **characterized by** further comprising a Global Position System (GPS), a Global System for Mobile communication (GSM) (I) and/or a long-range communication device able to connect wirelessly to a remote receptor.

7. A system according to any of the claims 1 to 6 **characterized by** further comprising a timer-clock (E).

8. A system according to any of the claims 1 to 7 **characterized by** further comprising a waterproof protecting housing.

9. A **process** for identification and quantification of animal species **characterized by** comprising the following steps:
e) capturing the images and sounds emitted by animals present in a selected area during a selected period of time,
f) recording, storing and/or streaming the captured data of (a),
g) filtering the sounds of (b), and
h) comparing the filtered sound data of (c) with an existing animal-sounds library for identification and quantification of the animal species.

10. A process according to claim 9 **characterized by** the sounds of steps (a), (b) and (c) are bird sounds, which are compared in step (d) with a bird-sounds library.

11. A process according to any of the claims 9 or 10 **characterized by** further including a step of processing the obtained data for identification and quantification of the relevant species.
